# EUROPEAN PATENT SPECIFICATION

(11) **EP 0 604 486 B1**
(45) Date of publication and mention of the grant of the patent: **08.07.1998**
(21) Application number: 92919035.3
(22) Date of filing: 25.08.1992
(51) Int. Cl.: F16L 23/00

(54) **INTERCHANGEABLE PROCESS CONNECTION RESISTANT TO INSTALLATION ERRORS**
AUSTAUSCHBARE VERBINDUNG MIT SICHERUNG GEGEN INSTALLATIONSFEHLER
CONNEXION INTERCHANGEABLE RESISTANT AUX ERREURS D'INSTALLATION

(30) Priority: 12.09.1991 US 757975
(43) Date of publication of application: 06.07.1994
(73) Proprietor: ROSEMOUNT INC., Eden Prairie, MN 55344 (US)
(72) Inventor: PETRICH, William, E., Golden Valley, MN 55422 (US); GLASER, Charles, A., Eagan, MN 55122 (US)
(74) Representative: Cross, Rupert Edward Blount
(86) International application number: US9207208
(87) International publication number: WO9305329

(56) References cited:
- DE-A- 2 424 839
- US-A- 3 468 561
- US-A- 4 466 290
- US-A- 4 738 276
- US-A- 4 833 922
- US-A- 4 920 626
- US-A- 4 993 754

## Description

### BACKGROUND OF THE INVENTION

The present invention relates to an assembly of a fluid pressure receiving body and a flange for connecting an input fluid pressure to a port on a surface of such body. US-A-4466290 discloses an assembly comprising a differential pressure transducer and a single flange connected to and fluidly coupled to the differential pressure transducer for conveying the fluid pressures thereto. The flange and the differential pressure transducer are joined together by bolts inserted through smooth bores in the transducer and threaded into threaded bores in the flange.

US-A-4738276 discloses a transmitter/manifold with integral transducer for measuring the differential pressure of a fluid conveying pipeline. An interface module is provided to provide for adaptability to a variety of user requirements. The interface module includes a flange portion having two bolt holes through which bolts are passed to fasten the interface module onto an appropriate instrument.

The present invention relates to fasteners for supporting and aligning a connecting flange on a transmitter body before permanent fasteners are installed. The flange is retained by the supporting and aligning fasteners in an unsealed condition so that if fluid pressure is supplied to the flange prior to installation of permanent fasteners, the fluid will leak freely and not build up pressure, which could result in sudden release. The invention also relates to providing permanent fastener bolts that are threadable into provided threads on the body only when the proper length bolt is used to insure full required thread engagement.

In the use of process control pressure transmitters, which include pressure sensor bodies having internal pressure sensors, several different adapters for connecting the fluid pressure piping from a process line to the pressure body are required for accommodating various pressure connections and user requirements in individual process equipment. For example, it is normal to provide a standard coplanar flange with one-quarter inch pipe tap connections installed at the factory with suitable permanent fasteners. One-half inch pipe thread mounting adapters that can be put on in the field are available. A standard coplanar flange also can be used with a three-valve manifold, and flange adapters are then also needed on the input side of the manifold. The thickness of the bolt receiving parts that are mounted to the transmitter body differs in each of these configurations, and thus each configuration requires a different length of permanent mounting bolt. In order to standardize shipments, three different sets of mounting bolts are shipped with each transmitter, including the standard set installed to hold the coplanar flange by itself.

The coplanar flange is also mounted by two alignment or temporary mounting screws, so if the permanent fastener bolts are removed for any reason, including change of input configuration, the coplanar flange remains supported and aligned in place on the transmitter. The alignment screws are to be used only for aligning and temporarily supporting the flange and body together if changes in the flange configuration are made. When the coplanar flange is mounted at the factory directly to the sensor body, short (first) permanent mounting bolts are used. If one-half inch pipe adapters are added to the flange, the first bolts have to be removed, and longer bolts which pass through the adapters and the flange installed. The three-valve manifold also mounted on the flange requires longer than standard bolts. If the installer does not install the longer permanent mounting bolts when changing input configuration and applies pressure, the alignment screws used on previous transmitters can fail. Also, if there is an attempt to install shorter bolts where longer ones are needed (if the installer is totally inattentive), the prior shorter bolts may be slightly engaged in the threads of the transmitter body. The alignment screws that are holding the flange in place do not have sufficient strength to hold the flange against pressure loads. The threads of the erroneously installed main mounting bolts may strip, and the alignment screws will fail, resulting in damaging the transmitter.

### SUMMARY OF THE INVENTION

According to the present invention there is provided an assembly of a fluid pressure receiving body and a flange for connecting an input fluid pressure to a port on a surface of such body, said flange having a thickness and an opening from a first connection side to a second side facing the surface of the body, alignment fastener means secured to said body for retaining the flange on the body including retainer means engaging the flange to stop movement relative to the fastener means in a direction away from the surface, the assembly including an arrangement for stopping the alignment fastener means at a position to prevent the alignment fastener means from being adjusted to cause the retainer means to hold the second side of the flange against the surface of the body; the retainer means being positioned at a distance from the surface such that the second side of the flange is spaced from the surface of the body when the flange engages the retainer means to define a gap through which process fluid can leak.

The present invention relates to a fastening arrangement for aligning and mounting a flange to a pressure sensor or transmitter body and providing a set of alignment fasteners which are stopped in a position so that the flange is not sealed against the body when only the alignment fasteners are in place. A gap is provided between one flange surface and the body surface on which inlet ports to the sensor or transmitter are formed, so that if the flange is connected to fluid and pressurized prior to the time of installation of permanent fastener bolts which can withstand the loads involved under pressure, the process fluid will leak and alert the operator to the fact that the permanent fastener bolts have not been installed. The leak occurs before building up pressure in the transmitter, which can cause failure of the alignment fastener.

Specifically, as shown, a stud is used for slidably guiding the pressure correction flange and a second shoulder bolt is used for aligning and supporting the coplanar flange in place and for controlling the spacing of the flange relative to the surface of the body on which the flange is mounted. The shoulder bolt has a shoulder stop surface that seats against the surface of the transmitter or sensor body and has a length between the shoulder surface and the head that is greater than the thickness of the flange so that the flange will be spaced from the body when the flange is urged against the head of the shoulder bolt. There are other types of stops that can also be used, of course, such as a sleeve over a bolt that fixes the length of tightening of the fastener, or a shoulder on an outer end of a stud with threads for a nut outwardly of the stud shoulder that likewise controls the effective length to a length that is greater than the thickness of the flange being supported.

The body of the transmitter or sensor has internal fastener threads for the permanent fasteners recessed inwardly from the surface against which the flange seats. The depth or length of the recess is coordinated with the length of fasteners that are provided for the transmitter so that only the correct length fasteners for the flange arrangement being attached will work with a selected arrangement of flanges and adapter available for the transmitter or sensor body.

### BRIEF DESCRIPTION OF THE DRAWINGS

Figure 1 is a top plan view of a typical transmitter having a sensor body, with a flange shown installed with support fasteners made according to the present invention;
Figure 2 is a front elevational view of the device of Figure 1;
Figure 3 is a fragmentary sectional view taken as on line 3--3 in Figure 2;
Figure 4 is a sectional view of a flange adapter for a one-half inch pipe threads requiring a second fastener of different length; and
Figure 5 is an exploded view of a transmitter having a three-valve manifold and flange adapter in position for installation with fasteners of a third length provided in a kit.

### DETAILED DESCRIPTION OF THE PREFERRED EMBODIMENTS

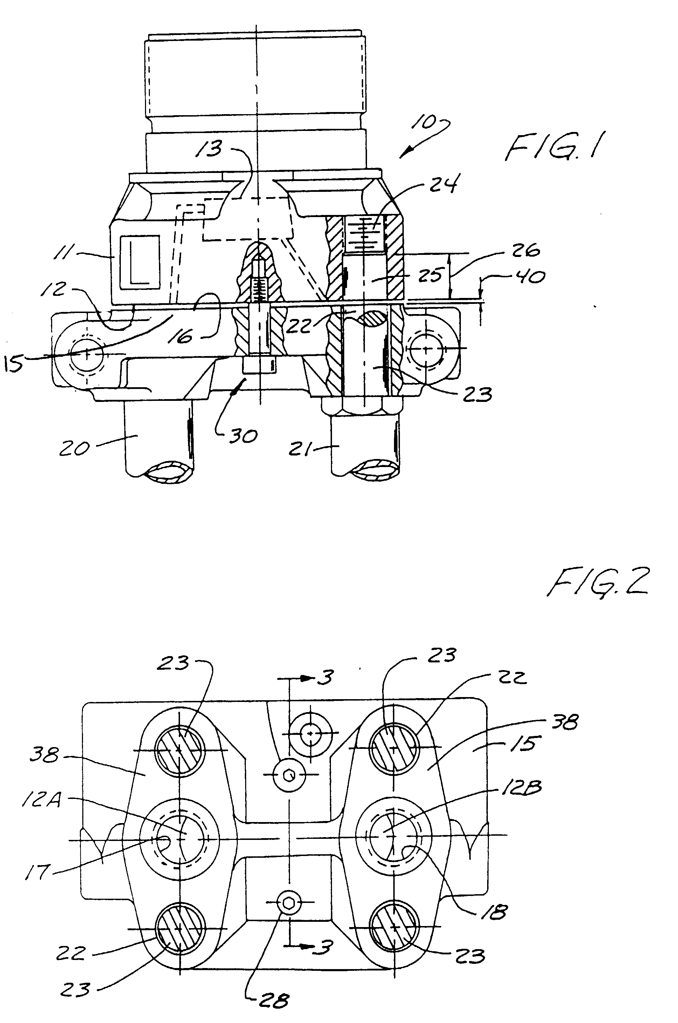

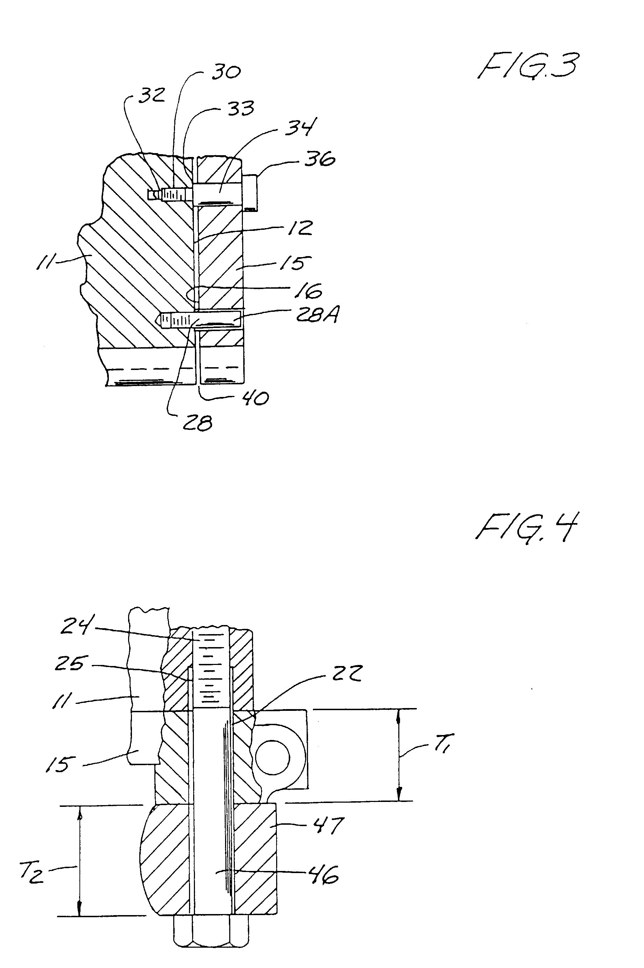

In Figure 1, a typical process control transmitter 10, has a body 11, which houses a pressure sensor and which has a surface 12 which includes ports for receiving fluid under pressure. Such fluid pressure sensor is shown schematically in dotted lines 13 on the interior of the body 11. Surface 12, as shown, is a planar surface, and in order to connect process lines of piping carrying the fluid under pressure to the ports in surface 12 (the ports are shown partially at 12A and 12B in Figure 2), an adapter or flange indicated generally at 15 is coupled to the body. The flange 15 is called a coplanar flange and can be used for mounting different adapters and parts for pressure connections to the transmitter. Flange 15 has a surface 16 that faces and mates with the surface 12, and which can be sealed thereagainst. Through openings indicated at 17 and 18 are threaded at their outer surface for connecting one-quarter inch pipe thread pipes shown schematically in Figure 1 at 20 and 21. The pipes are connected to sources of fluid under pressure that are to be measured.

Additionally, the flange 15 has, as shown, four through bores or bolt openings 22, for permanently fastening the flange 15 against the surface 12 and the sensor body 11 by threading fasteners, a first set of which is indicated at 23, into threaded bores 24 in the body. As shown, the threaded bores 24 are at the inner end of larger counter bores 25 that have a recessed length 26. The length of threaded bores 24 is adequate to have thread engagement sufficient to carry the loads required when the flange 15 is pressurized.

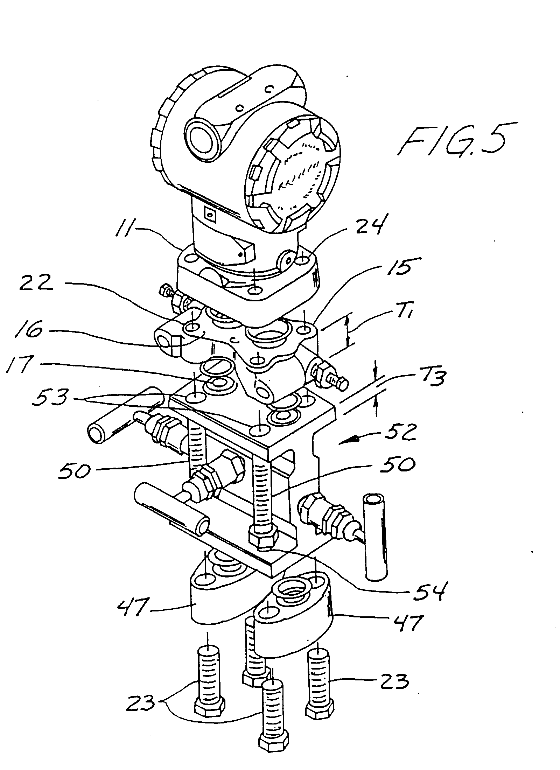

In Figures 1 and 3, the flange 15 is shown without fasteners 23 secured for illustrative purposes. Fasteners for supporting the flange in place, but not for permanent installation are illustrated. A guide stud 28, and a shoulder bolt 30 which pass through openings respectively in the flange 15, and which in turn, as shown, are threaded into the body 11 are used. The stud 28 has a smooth shank 28A that slidably fits into an opening in the flange 15. The shoulder bolt 30, as shown, has a threaded end 32, and a smooth, larger diameter bolt length 34 which joins a shoulder surface 33. When the shoulder bolt is threaded into place, the shoulder 33 abuts against the surface 12. The smooth bolt length 34 of the shoulder bolt, between the surface 12 and the inner surface of a shoulder bolt head 36 is greater than the thickness of flange 15, measured between outer surface 38 and the surface 16. This insures that when surface 38 is urged against the inner surface of the shoulder bolt head 36, there is a gap as indicated at 40 between the surface 16 and surface 12. If fluid under pressure is provided through a connection 21, with only the alignment fasteners in place, the flange body interface will leak freely. The fluid will not pressurize the sensor body, the ports or passageways in the body, or the sensor 13. If pressure was permitted to build up, and only the prior alignment fasteners or screws are holding the flange in place, such as two threaded screws in place of the stud 28 and shoulder bolt 30, the unit could fail after pressure buildup. The pressure could be built up enough to provide an unwanted separation of the parts, and cause damage.

Thus, when a particular flange arrangement that has been shipped or used with the transmitter body, is to be changed and the standard bolts 23 are removed, the guide stud 28 and shoulder bolt 30, which are also installed at the factory, will support the flange 15 in alignment, but with a gap as indicated at 40. Seals are provided between flange 15 and surface 12 around the input ports in surface 12. The space 40 is large enough so the seals are not effective.

As stated, different flange and adapter combinations can be used with the same transmitter body, and these combinations have different overall thicknesses, that is, different spacings between the surface 16 that mates with the surface 12 and the outer side surface of the supported members engaged by the permanent bolt heads. The bolts that are used for permanent fasteners thus have to be different lengths. For example, in Figure 1, the first bolt 23 is illustrated with the flange 15, and can be threaded into the transmitter or sensor body. A second bolt shown at 46 in Figure 4 is one bolt of a set of four and is used for a second thickness flange assembly. For example, the flange 15 may have a half-inch pipe thread adapter 47 thereon for a larger input connection. The combination of parts has a thickness such that the longer bolt 46 threads into the threaded portion 24 inwardly of the non-threaded counterbore 25. The length of the bolts 46 is selected to insure adequate engaged threads for holding the flange under operating pressure.

As shown in Figure 5, with a three-valve manifold 52 illustrated schematically used in combination with flange 15, the thickness is such that third bolts 50 are used in order to reach the body bore threaded portions 24. Bolts 50 are shorter than bolts 46 as shown. The input side of the three-valve manifold 52 has a pair of adapters 47 that are attached with the standard bolts 23 to threaded bores 54 on the three-valve manifold. The adapters permit connection of input piping to the manifold 52.

The fastener bolts 50 pass through bores 53 in the attachment end of the three-valve manifold 52 and the bores 22 in the flange 15, and will thread into the threaded section 24 of the bores in the transmitter body 11. The bolts 50 are of length to fully engage the threads 24. The permanent bolts can pass through the threaded bores 24 if the bolts are longer than required resulting in full thread engagement but not sealing manifold 52 to flange 15. For example, if bolts 46 are used to secure flange 15 and manifold 52 to body 11, bolts 46 will bottom on body 11 before bottoming on manifold 52. Alternatively, if bolts 50 or 46 secure flange 15 to sensor body 11, the bolts will bottom on body 11 before bottoming on flange 15.

It can be seen that with the counter bore 25 inwardly from the surface 12, the threads of bolts 23 and 50 will not engage in the threaded portion 24 when the flange 15 and adapters 47 are in place and either of the bolts 23 and 50 are placed into the aligning bores in the adapters and flange 15. The bolts 23 will not engage in the threads 24 when the flange 15 and three-valve manifold 52 are in place and the bolts are passed through bores 53 and 22. Without the counter bore 25, it would be possible for some of the threads of bolt 50 to be engaged, even when the adapter 47 was in place, but the amount of engagement of threads would not be sufficient to carry the loads when the flange is pressurized and failure of the threads could occur. Also, without the counterbore, bolts 23 would engage a few threads if used in place of bolts 50 on the three-valve manifold and coplanar flange arrangement.

Each transmitter as disclosed is shipped with a kit of three sets of bolts for fastening flanges in place. The bolt sets are of the lengths shown at 23, 46 and 50. The bolts 23 are generally factory installed to hold coplanar flange 15, in place while the other sets are shipped in separate packages. The counter bore 25 is selected to be the proper length for the thickness of various flange combinations in relation to the bolt length provided, so that a wrong length bolt cannot be threaded into bore 24 at all, thereby insuring that a proper length of thread engagement will be provided for the permanent bolts. The temporary alignment fasteners are stopped in position to maintain the gap 40 so the flange will not be pressurized unless the correct length permanent attachment bolts are in place. Different flanges and adapters can be used and, of course, the bolts selected will be of length to correspond to such different flanges and adapters.

Even inattentive operators will install the correct permanent bolts, and will not leave the only temporary fasteners in place when pressurizing the system because the leakage resulting will warn the operator before pressure builds up.

As an example, to accomplish the objectives in one form of the invention, the thickness of the flange 15 end is T₁, the thickness of the adapter is indicated at T₂ and the lips or flange on the three-valve manifold having bores 53 is T₃. The axial length of counter bore 25 in this example is .429 inches. The relationship in Table I below shows the bolt lengths selected to avoid engagement of threads if an attempt to install a bolt length is made. Full thread engagement means substantially all threads in threaded section 24 are engaged.

**TABLE I**

| THREAD ENGAGEMENT LENGTH | | | |
|---|---|---|---|
| ITEM(S) | BOLT LENGTH (INCHES) And Thread Engagement | | |
| | BL 1.75" | BL 2.25" | BL 2.88" |
| Coplanar flange (T₁ = 0.845") | Full | Full | Full |
| Coplanar flange (T₁ 0.845") and three-valve manifold (T₃ 0.430") | 0 | Full | Full |
| Coplanar flange (T₁ = 0.845") and flange adapter unions (T₂ = 1.10") | 0 | 0 | Full |
| | | | |

## Claims

1. An assembly of a fluid pressure receiving body (11) and a flange (15) for connecting an input fluid pressure to a port (12A, 12B) on a surface (12) of such body (11), said flange (15) having a thickness and an opening (17, 18) from a first connection side (38) to a second side (16) facing the surface of the body (11), alignment fastener means (30, 28) secured to said body (11) for retaining the flange (15) on the body (11) including retainer means (36) engaging the flange (15) to stop movement relative to the fastener means (30, 28) in a direction away from the surface (12), the assembly including an arrangement for stopping the alignment fastener means at a position to prevent the alignment fastener means (30) from being adjusted to cause the retainer means (36) to hold the second side (16) of the flange (15) against the surface (12) of the body (11); the retainer means (36) being positioned at a distance from the surface (12) such that the second side (16) of the flange (15) is spaced from the surface (12) of the body (11) when the flange (15) engages the retainer means (36) to define a gap (40) through which process fluid can leak.

2. The assembly of claim 1 wherein the alignment fastener means (30, 28) further comprises a guide (28) separate from the retainer means (36) for orienting the flange (15) in an operable position for alignment, the guide (28) slidably engaging the flange (15) to permit unrestricted movement of the flange (15) away from the surface (12) of the body (11) along the guide (28).

3. The assembly of claim 1 wherein the alignment fastener means (30, 28) for retaining the flange includes a stop (33).

4. The assembly of either of claims 1 or 2 wherein the alignment fastener means (30, 28) comprises a shoulder bolt (30) havinq a shoulder (33) seated against the surface (12) on the body (11), and the retainer means (36) comprises a bolt head on the shoulder bolt (30) spaced from the surface (12) a distance greater than the thickness of the flange (15), the flange (15) being positioned between the head (36) and the surface (12) of the body (11).

5. The assembly of any one of the previous claims further including at least one adapter (52) connectable to the first connection side (38) of the flange (15), the flange (15) having first fastener bores (22) therein for receiving permanent fasteners (23) separate from the alignment fastener means (30, 28), the body (11) having a plurality of body bores (24,25) aligning with the first fastener bores (22), each of the body bores (24, 25) having an outer unthreaded counterbore section (25) and an inner threaded section (24) for receiving first permanent fasteners (23) passing through the first fastener bores (22), a set of first permanent fasteners (23) for sealingly mounting the flange (15) to the body (11), and the at least one adapter (52) having second fastener bores (53) aligning with the first fastener bores (22) in the flange (15) and the body bores (24, 25) in the body (11), a second set of permanent fasteners (50) having a length to pass through the second fastener bores (53), the first fastener bores (22) and to engage a desired length of the inner threaded section (24) in aligning body bores (24, 25), the counterbore length (26) of the body bores (24, 25) being selected to insure that the fasteners (23) of the first set of permanent fasteners (23) will not reach the inner threaded section (24) of an aligning body bore (24, 25) when passed through a second fastener bore (53), and through an aligning first fastener bore (22) in the flange (15) and into an aligning body bore (24, 25).

6. The assembly of claim 5 and a second adapter (47) connectable to the connection side (38) of the flange (15) in place of the at least one adapter (52), the second adapter (47) having third fastener bores aligning with the first fastener bores (22) in the flange (15) and the body bores (24,25), a third set of fasteners (46) having a length to pass through the third fastener bores (46), the first fastener bores (22) and into the body bores (24,25), to engage the inner threaded section (24) of aligning body bores (24,25), and said second adapter (47) having third fastener bore lengths greater than the second fastener bore lengths (53), so that the fasteners (46) forming the third set of fasteners (46) are greater in length than the first and second sets of fasteners (23,53), the length of the third fastener bores being such that in relation to the length of the first and second fasteners (23,53), and the length of the counterbore section (25) of the body bores (24,25), such that the first and second fasteners (23,53), respectively, will not reach the inner threaded section (24) of aligning body bores (24,25) if passed through the third fastener bores, the first fastener bores (22), and an aligning body bore (24,25), respectively.

## Patentansprüche

1. Ein Aufbau eines Fluiddruck-Aufnahmekörpers (11) und eines Flansches (15), um einen Eingangs-Fluiddruck zu einer Öffnung (12A, 12B) auf einer Oberfläche (12) eines solchen Körpers (11) zu leiten, wobei der Flansch (15) von einer ersten Verbindungsseite (38) zu einer zweiten Seite (16), die der Oberfläche des Körpers (11) gegenüberliegt, eine Dicke und eine Öffnung (17, 18) aufweist, wobei eine Ausrichtungs-Befestigungsvorrichtung (30, 28), die am Körper (11) befestigt ist, um den Flansch (15) auf dem Körper (11) zu halten, eine Rückhaltevorrichtung (36) aufweist, die mit dem Flansch (15) in Eingriff steht oder an diesem anliegt, um eine Bewegung relativ zur Befestigungsvorrichtung (30, 28) in eine Richtung von der Oberfläche (12) weg zu stoppen, wobei der Aufbau eine Anordnung aufweist, um die Ausrichtungs-Befestigungsvorrichtung an einer Stelle zu stoppen, um die Ausrichtungs-Befestigungsvorrichtung (30) daran zu hindern, so eingestellt zu werden, daß die Rückhaltevorrichtung (36) dazu veranlaßt wird, die zweite Seite (16) des Flansches (15) gegen die Oberfläche (12) des Körpers (11) zu halten; wobei die Rückhaltevorrichtung (36) in einem solchen Abstand von der Oberfläche (12) angeordnet ist, daß die zweite Seite (16) des Flansches (15) von der Oberfläche (12) des Körpers (11) beabstandet ist, wenn der Flansch (15) mit der Rückhaltevorrichtung (36) in Eingriff steht, um einen Spalt (40) festzulegen, durch den Prozeßfluid auslaufen kann.

2. Aufbau nach Anspruch 1, dadurch gekennzeichnet, daß die Ausrichtungs-Befestigungsvorrichtung (30, 28) weiterhin eine von der Rückhaltevorrichtung (36) separate Führung (28) zum Einrichten des Flansches (15) in eine Betriebsstellung für die Ausrichtung aufweist, wobei die Führung (28) mit dem Flansch (15) in gleitbeweglichem Eingriff steht, um eine uneingeschränkte Bewegung des Flansches (15) weg von der Oberfläche (12) des Körpers (11) entlang der Führung (28) zu ermöglichen.

3. Aufbau nach Anspruch 1, dadurch gekennzeichnet, daß die Ausrichtungs-Befestigungsvorrichtung (30, 28) zum Halten des Flansches einen Anschlag (33) aufweist.

4. Aufbau nach einem der Ansprüche 1 oder 2, dadurch gekennzeichnet, daß die Ausrichtungs-Befestigungsvorrichtung (30, 28) einen Schulterbolzen (30) mit einer Schulter (33) aufweist, die gegen die Oberfläche (12) auf dem Körper (11) aufgesetzt ist, und die Rückhaltevorrichtung (36) einen Bolzenkopf auf dem Schulterbolzen (30) aufweist, der von der Oberfläche um einen Abstand beabstandet ist, der größer ist als die Dicke des Flansches (15), wobei der Flansch (15) zwischen dem Kopf (36) und der Oberfläche (12) des Körpers (11) angeordnet ist.

5. Aufbau nach einem der vorhergehenden Ansprüche, dadurch gekennzeichnet, daß dieser weiterhin mindestens einen Adapter (52) aufweist, der mit der ersten Verbindungsseite (38) des Flansches (15) verbunden werden kann, wobei der Flansch (15) erste Befestigungsbohrungen (22) in sich zur Aufnahme von unlösbaren Schrauben (23) aufweist, die von der Ausrichtungs-Befestigungsvorrichtung (30, 28) getrennt sind, wobei der Körper (11) eine Vielzahl von Körper-Bohrungen (24, 25) aufweist, die mit den ersten Befestigungsbohrungen (22) fluchten, wobei jede der Körper-Bohrungen (24, 25) einen äußeren Senkabschnitt (25) ohne Gewinde und einen inneren Gewindeabschnitt (24) zur Aufnahme von ersten unlösbaren Schrauben (23) aufweist, die durch die ersten Befestigungsbohrungen (22) verlaufen, eines Satzes erster unlösbarer Schrauben (23) zur abdichtenden Anbringung des Flansches (15) am Körper (11), und wobei der mindestens eine Adapter (52) zweite Befestigungsbohrungen (53) aufweist, die mit den ersten Befestigungsbohrungen (22) im Flansch (15) und den Körper-Bohrungen (24, 25) im Körper (11) fluchten, wobei ein zweiter Satz unlösbarer Schrauben (50) eine solche Länge aufweist, daß sie durch die zweiten Befestigungsbohrungen (53), die ersten Befestigungsbohrungen (22) verlaufen und mit einer gewünschten Länge des inneren Gewindeabschnitts (24) in den fluchtenden Körper-Bohrungen (24, 25) in Eingriff stehen, wobei die Senklänge (26) der Körper-Bohrungen (24, 25) so ausgewählt ist, daß gewährleistet ist, daß die Schrauben (23) des ersten Satzes unlösbarer Schrauben (23) nicht den inneren Gewindeabschnitt (24) einer fluchtenden Körper-Bohrung (24, 25) erreichen, wenn diese durch eine zweite Befestigungsbohrung (53) und durch eine fluchtende erste Befestigungsbohrung (22) im Flansch (15) und in eine fluchtende Körper-Bohrung (24, 25) geführt werden.

6. Aufbau nach Anpruch 5 und anstelle des mindestens einen Adapters (52) ein zweiter Adapter (47), der mit der Verbindungsseite (38) des Flansches (15) verbunden werden kann, wobei der zweite Adapter (47) dritte Befestigungsbohrungen aufweist, die mit den ersten Befestigungsbohrungen (22) im Flansch (15) und den Körper-Bohrungen (24, 25) fluchten, wobei ein dritter Satz Schrauben (46) eine solche Länge aufweist, daß sie durch die dritten Befestigungsbohrungen (46), die ersten Befestigungsbohrungen (22) und in die Körper-Bohrungen (24, 25) verlaufen, um mit dem inneren Gewindeabschnitt (24) der fluchtenden Körper-Bohrungen (24, 25) in Eingriff zu stehen, und wobei der zweite Adapter (47) Längen von dritten Befestigungsbohrungen aufweist, die größer sind als die Längen der zweiten Befestigungsbohrungen (53), so daß die Schrauben (46), die den dritten Satz Schrauben (46) bilden, länger sind als die ersten und zweiten Sätze Schrauben (23, 53), wobei die Länge der dritten Befestigungsbohrungen so ist, daß sie zur Länge der ersten und zweiten Schrauben (23, 53) im Verhältnis steht, und die Länge des Senkabschnitts (25) der Körper-Bohrungen (24, 25) so ist, daß die ersten bzw. zweiten Schrauben (23, 53) nicht den inneren Gewindeabschnitt (24) der fluchtenden Körper-Bohrungen (24, 25) erreichen, wenn diese durch die dritten Befestigungsbohrungen, die ersten Befestigungsbohrungen (22) bzw. eine fluchtende Körper-Bohrung (24, 25) geführt werden.

## Revendications

1. Ensemble comprenant un corps (11) récepteur de pression hydraulique et une bride (15) pour raccorder une entrée de fluide sous pression à un orifice (12A, 12B) se trouvant à la surface (12) de ce corps (11), ladite bride (15) ayant une épaisseur et une ouverture (17, 18) qui s'étendent d'un premier côté de raccordement (38) à un deuxième côté (16) situé en regard de la surface du corps (11), des moyens de fixation en alignement (30, 28) fixés audit corps (11) pour retenir la bride (15) sur le corps (11), comprenant des moyens de retenue (36) entrant en prise avec la bride (15) pour arrêter son déplacement vis-à-vis des moyens de fixation (30, 28) dans une direction qui s'éloigne de la surface (12), l'ensemble comprenant un arrangement qui permet de bloquer les moyens de fixation en alignement à une certaine position, pour empêcher les moyens de fixation en alignement (30) d'être ajustés de telle sorte que les moyens de retenue (36) maintiennent le deuxième côté (16) de la bride (15) contre la surface (12) du corps (11) ; les moyens de retenue (36) étant positionnés à une certaine distance de la surface (12), de telle sorte que le deuxième côté (16) de la bride (15) soit écarté de la surface (12) du corps (11) lorsque la bride (15) entre en prise avec les moyens de retenue (36), pour définir un interstice (40) au travers duquel le fluide de traitement peut fuir.

2. Ensemble selon la revendication 1, dans lequel les moyens de fixation en alignement (30, 28) comprennent en outre un guide (28) distinct des moyens de retenue (36), servant à orienter la bride (15) dans une position correcte pour l'alignement, le guide (28) entrant en prise en glissement avec la bride (15) pour permettre un déplacement non limité de la bride (15) dans le sens de l'éloignement vis-à-vis de la surface (12) du corps (11), le long du guide (28).

3. Ensemble selon la revendication 1, dans lequel les moyens de fixation en alignement (30, 28) servant à retenir la bride comprennent une butée (33).

4. Ensemble selon l'une ou l'autre des revendications 1 ou 2, dans lequel les moyens de fixation en alignement (30, 28) comprennent un boulon épaulé (30) ayant un épaulement (33) en appui contre la surface (12) du corps (11), et les moyens de retenue (36) comprennent une tête de boulon sur le boulon épaulé (30), écartée de la surface (12) d'une distance supérieure à l'épaisseur de la bride (15), la bride (15) étant disposée entre la tête (36) et la surface (12) du corps (11).

5. Ensemble selon l'une quelconque des revendications précédentes, comprenant en outre au moins un adaptateur (52) pouvant être raccordé au premier côté de raccordement (38) de la bride (15), la bride (15) contenant des premiers alésages (22) pour éléments de fixation, destinés à recevoir des éléments de fixation permanents (23) distincts des moyens de fixation en alignement (30, 28), le corps (11) possédant une pluralité d'alésages de corps (24, 25) alignés avec les premiers alésages (22) pour éléments de fixation, chacun des alésages de corps (24, 25) ayant un tronçon extérieur contrepercé non fileté (25) et un tronçon intérieur fileté (24) destiné à recevoir les premiers éléments de fixation permanents (23) passant par les premiers alésages (22) pour éléments de fixation, un ensemble de premiers éléments de fixation permanents (23) pour monter de manière étanche la bride (15) sur le corps (11), et le au moins un adaptateur (52) ayant des deuxièmes alésages (53) pour éléments de fixation, alignés avec les premiers alésages (22) pour éléments de fixation, aménagés dans la bride (15), et avec les alésages de corps (24, 25) aménagés dans le corps (11), un deuxième ensemble d'éléments de fixation permanents (50) ayant une longueur leur permettant de passer par les deuxièmes alésages (53) pour éléments de fixation, les premiers alésages (22) pour éléments de fixation et d'entrer en prise avec une longueur souhaitée du tronçon intérieur fileté (24) des alésages de corps (24, 25) alignés avec ces derniers, la longueur contrepercée (26) des alésages de corps (24, 25) étant choisie de façon à garantir que les éléments de fixation (23) du premier ensemble d'éléments de fixation permanents (23) n'atteignent pas le tronçon intérieur fileté (24) d'un alésage de corps (24, 25) aligné, lorsqu'on les fait passer par un deuxième alésage (53) pour élément de fixation, et par un premier alésage (22) pour élément de fixation, aligné avec ce dernier et aménagé dans la bride (15), puis dans un alésage de corps (24, 25) aligné avec ces derniers.

6. Ensemble selon la revendication 5 et un deuxième adaptateur (47) pouvant être raccordé au côté de raccordement (38) de la bride (15) à la place de l'au moins un adaptateur (52), le deuxième adaptateur (47) ayant des troisièmes alésages pour éléments de fixation, alignés avec les premiers alésages (22) pour éléments de fixation, aménagés dans la bride (15), et avec les alésages de corps (24, 25), un troisième ensemble d'éléments de fixation (46) ayant une longueur leur permettant de passer par les troisièmes alésages (46) pour éléments de fixation, les premiers alésages (22) pour éléments de fixation et à l'intérieur des alésages de corps (24, 25), afin d'entrer en prise avec le tronçon intérieur fileté (24) des alésages de corps (24, 25) alignés avec ces derniers, et ledit deuxième adaptateur (47) ayant une longueur de troisièmes alésages pour éléments de fixation supérieure à la longueur des deuxièmes alésages (53) pour éléments de fixation, de telle sorte que la longueur des éléments de fixation (46) formant le troisième ensemble d'éléments de fixation (46) soit plus grande que celle du premier et du deuxième ensembles d'éléments de fixation (23, 53), la longueur des troisièmes alésages pour éléments de fixation étant telle, vis-à-vis de la longueur des premiers et des deuxièmes éléments de fixation (23, 53), ainsi que de la longueur du tronçon contrepercé (25) des alésages de corps (24, 25), que les premiers et les deuxièmes éléments de fixation (23, 53) n'atteignent pas le tronçon intérieur fileté (24) des alésages de corps (24, 25) alignés, si on les fait passer respectivement par les troisièmes alésages pour éléments de fixation, les premiers alésages (22) pour éléments de fixation, puis dans un alésage de corps (24, 25) aligné avec ces derniers.
